# FASCICULE DE BREVET EUROPEEN

(11) **EP 0 777 547 B1**
(45) Date de publication et mention de la délivrance du brevet: **13.10.1999**
(21) Numéro de dépôt: 95943502.5
(22) Date de dépôt: 19.07.1995
(51) Int. Cl.: B23D 61/12, B23D 65/00, B23D 63/12

(54) **PROCEDE DE FABRICATION D'UNE LAME DE SCIE A RUBAN, SCIE OBTENUE ET DISPOSITIF PERMETTANT LA MISE EN OEUVRE DU PROCEDE**
VERFAHREN ZUR HERSTELLUNG EINES BANDSÄGEBLATTES, SÄGEBLATT HERGESTELLT NACH DIESEM VERFAHREN UND VORRICHTUNG ZUR DURCHFÜHRUNG DIESES VERFAHRENS
METHOD FOR THE MANUFACTURE OF A BAND SAW BLADE, SAW OBTAINED AND DEVICE FOR CARRYING OUT THE METHOD

(30) Priorité: 20.07.1994 FR 9408972
(43) Date de publication de la demande: 11.06.1997
(73) Titulaire: ASSOCIATION FORMABOIS, 75001 Paris (FR); Doussoux, Jacques, 45430 Checy (FR)
(72) Inventeur: DOUSSOUX, Jacques, F-45430 Chécy (FR)
(74) Mandataire: Debay, Yves
(86) Numéro de dépôt international: FR9500969
(87) Numéro de publication internationale: WO9602347

(56) Documents cités:
- DE-A- 2 459 514
- DE-A- 3 433 279
- DE-B- 1 037 810
- DE-U- 9 206 000
- GB-A- 2 113 144
- US-A- 4 232 578
- US-A- 4 357 842

## Description

La présente invention concerne un procédé de fabrication d'une lame de scie à ruban, la scie à ruban ainsi obtenue et le dispositif de mise en oeuvre du procédé de fabrication.

De nombreux types de scies sont connus de l'art antérieur. Ainsi, le document DE-A-2 459 514 enseigne une lame de scie circulaire pour bois et matière plastique, en particulier pour panneaux revêtus de résines synthétiques, comportant des modules de 4 à 6 dents dont le nombre dépend de la longueur de la lame et dont au moins une dent sur cinq est moins haute que les autres dents. Les dents de cette scie sont constituées soit de stélite, soit de carbure de tungstène. La constitution de la scie est formée par des plaquettes de carbure de tungsténe rapportées par brasage sur une âme circulaire. La scie circulaire du document DE-A-2 459 514 comporte des dents de prédécoupe de largeur plus restreinte que les dents de coupe, les dents de prédécoupe ayant une inclinaison alternée à gauche et à droite. Chacune des dents qui est moins haute est également plus large que les autres dents. Le décalage vers le bas de ces dents moins hautes est compris entre 0,2 et 0,4 mm.

De même, le document US-A-4 232 578 enseigne une scie pour métaux à petit pas dont chaque dent comporte, sur une première de ses deux faces, un premier angle de dépouille de 10 à 25 degrés formé au sommet de la dent et, en direction du creux de la dent, un second angle de dépouille compris entre 30 et 40 degrés. Le bec de la dent, ou seconde face de la dent, comporte un angle d'attaque de 12 à 25 degrés. A une distance déterminée de cet angle d'attaque, la dent comporte, vers le creux de la dent, une surface formant un angle de moins de 12 degrés avec l'angle d'attaque et de direction opposée à ce dernier. La hauteur h de la dent est égale à la moitié environ du pas P.

Enfin, le document DE-A-3 433 279 décrit une lame de scie dont la portion constituant les dents est plus large que l'âme, les flancs de chaque dent étant inclinés vers l'extérieur par rapport aux flancs de l'âme. Le sommet des dents comporte un déphasage alternatif à gauche et à droite formé par un biseau. Le processus de fabrication d'une lame de scie enseigné par le document DE-A-3 433 279 consiste à faire passer un ruban métallique dans un four durcisseur, puis à découper les dents par une meule agissant sur le sommet du ruban. Le ruban est passé entre deux meules de rectification pour donner au profilé une forme telle que l'un des bords du profilé soit plus large et constitue sur l'autre bord une portion de section tronconique. Une deuxième meule réalise les déphasages alternatifs en rectifiant alternativement les angles des bases tronconiques des dents de façon à former les biseaux disposés alternativement d'un côté et de l'autre.

Aucune des scies ainsi obtenues n'est particulièrement intéressante lors de son utilisation dans le sciage de première transformation et notamment pour le sciage des bois en grume gelés ou pour le sciage des bois en grume possédant un taux d'humidité élevé ou pour des bois avec des noeuds importants.

La difficulté de scier les bois gelés se traduit par le phénomène suivant. La sciure enlevée par chaque dent s'échappe du creux de la dent et vient se loger entre la lame et le bois où elle reste collée. La sciure coince le corps de lame, et celle-ci dévie de gauche à droite par rapport à la rectitude du trait de scie. De plus, la vitesse de la grume, et/ou la vitesse d'amenage dans la lame, doit être réduite. Ceci produit donc, soit des diminutions de rendement de la scierie, soit si l'on souhaite conserver le même rendement, une diminution de la qualité des grumes sciées, notamment en ce qui concerne la rectitude du trait de scie.

Parfois même, il devient impossible de scier les grumes gelées et l'unité de sciage s'arrête.

Enfin, en ce qui concerne le sciage des grumes possédant un taux d'humidité élevé, avec les scies traditionnelles, beaucoup de sciures restent collées sur la surface débitée en provoquant des moisissures ou une coloration pour les essences riches en tanin, par exemple tel que le chêne et ceci altère donc le bois en cours de séchage.

Il est donc impératif de disposer d'une lame de scie qui permette d'évacuer complètement la sciure, notamment pour le sciage des bois en grumes gelés, d'autre part pour le sciage des bois en grumes possédant un taux d'humidité très élevé.

Ce but est atteint par le fait que la lame de scie à ruban comportant une portion de section tronconique formant la dépouille latérale par rapport au corps de la lame et pourvue de dents découpées dans la portion de section tronconique selon un pas régulier, chaque denture ayant une profondeur qui sera fonction de l'épaisseur e du corps de la lame et de la vitesse de sciage ainsi que de la vitesse d'ammenage des grumes, le pas étant compris entre 45 et 60 mm, la scie comporte des modules de 4 à 6 dents, dont le nombre dépend de la longueur de la lame et des conditions d'utilisation, et en ce qu'au moins une dent sur 4, ou 5, ou 6, est moins haute que les autres dents, de 6 à 8 dixièmes de millimètres, pour des hauteurs de dents variants entre 16 et 20 millimètres.

Selon une autre particularité, la lame de scie à ruban comporte une portion de section tronconique formant la dépouille latérale par rapport au corps de la lame et pourvue de dents découpées dans la portion de section tronconique selon un pas régulier, chaque denture ayant une profondeur qui sera fonction de l'épaisseur e du corps de la lame et de la vitesse de sciage ainsi que de la vitesse d'ammenage des grumes, le pas régulier étant compris entre 2 à 3 fois la hauteur des dents les plus hautes, et la hauteur d'au moins une dent sur 4, ou 5, ou 6 est diminuée d'une valeur de 4 % de la hauteur des dents les plus hautes.

Selon une autre particularité, dans le cas où une deuxième dent est abaissée cette hauteur est diminuée de 2 % par rapport à la première dent abaissée.

Selon une autre particularité, la pointe de chaque dent est écrasée pour donner la voie.

Selon une autre particularité, on choisira des modules de six dents et une dent sur six est abaissée pour une vitesse de coupe de 40 à 48 mètres seconde.

Selon une autre particularité, on choisira des modules de cinq dents et une dent sur cinq est abaissée.

Selon une autre particularité, on choisira des modules de quatre dents et une dent sur quatre est abaissée pour la coupe des bois exotiques.

Selon une autre particularité, le pas entre dents sera choisi entre 45 et 50 millimètres.

Selon une autre particularité, on choisit des modules de cinq ou six dents et que l'on abaisse la hauteur de deux dents sur cinq ou six.

Par ailleurs, le document DE-B-1 037 810 enseigne une machine pour rectifier les dents d'une scie comportant deux cames dont une première permet de commander le déplacement de la meule d'une certaine hauteur H. La seconde came permet, en venant appuyer sur un levier, de faire modifier la descente de la meule d'une valeur n. Cette machine permet ainsi d'écrêter la pointe des dents, sans aboutir pour autant à une scie présentant les particularités évoquées ci-dessus.

Un autre but est également de proposer un procédé de fabrication d'une lame de scie à ruban à une ou deux faces de coupe selon une des revendications précédentes consistant :
- à former un ruban avec, sur les faces du côté correspondant à la surface de coupe, des dépouilles latérales;
- à former sur le bord de coupe les profils de denture à pas constant et de même hauteur;
   caractérisé en ce qu'il comporte en outre les étapes consistant :
- à écraser la pointe de chaque dent pour donner la voie;
- à affûter chaque dent;
- à rectifier le profil du dos et de la pointe d'au moins une dent sur n pour abaisser d'une valeur déterminée sa hauteur par rapport aux autres dents.

Un autre but de l'invention est de proposer une machine affûteuse permettant la mise en oeuvre du procédé.

Ce but est atteint par le fait que la machine affûteuse comporte sur le mécanisme à cames permettant de former le profil de la denture un dispositif débrayable permettant d'assurer une descente sélective sur une hauteur supérieure de la meule de façon à baisser le profil du dos et de la pointe de la dent sélectionnée lorsque le mécanisme est actionné.

Selon une autre particularité, elle comporte des moyens de compter le nombre de dents et de provoquer automatiquement la sélection et l'actionnement du mécanisme de descente.

D'autres particularités et avantages de la présente invention apparaîtront plus clairement à la lecture de la description ci-après faite en référence aux dessins annexés dans lesquels :
- la figure 1 représente une lame de scie à module de quatre dents selon l'invention ;
- la figure 2 représente une vue en coupe à la hauteur de la quatrième dent ;
- la figure 3 représente une lame à denture classique où toutes les dents ont la même hauteur h ;
- la figure 4 représente une vue en coupe du corps de la lame coincé dans la grume par la sciure ;
- la figure 5 représente une étape du procédé de fabrication de la lame de scie selon l'invention ;
- la figure 6 représente une autre étape du procédé de fabrication ;
- la figure 7A représente une vue latérale du détail d'une dent obtenue selon le procédé ;
- la figure 7B représente une vue détaillée du dessus de la dent ;
- la figure 7c représente une vue en coupe du détail de modification ;
- la figure 8 représente une vue de profil d'un autre type de lame obtenu selon le procédé de l'invention;
- la figure 9 représente une première variante de la machine permettant la mise en oeuvre du procédé de l'invention ;
- la figure 10 représente une deuxième variante d'une machine permettant la mise en oeuvre du procédé selon l'invention.

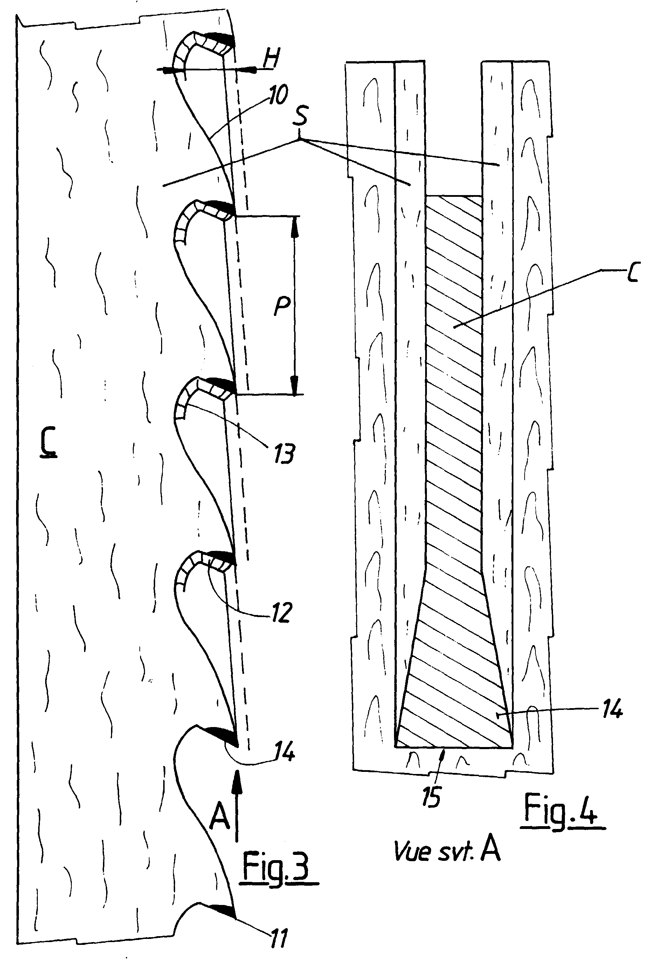

Les figures 3 et 4 représentent les lames de l'art antérieur, comportant une portion de section tronconique qui forme la dépouille latérale par rapport au corps (C) de la lame. Dans le ruban ainsi formé, sont découpées des dents selon un pas régulier (P), chaque denture ayant une profondeur (H) qui sera fonction de l'épaisseur (e) du corps de la lame et de l'ordre de onze fois cette épaisseur pour des vitesses de sciage de 40 à 48 mètres seconde avec une vitesse d'amenage de l'ordre de 50 mètres/minute. Le pas de la denture sera compris entre 45 et 60 millimètres et en général les pas sont de préférence choisis de l'ordre de 45 à 50 millimètres.

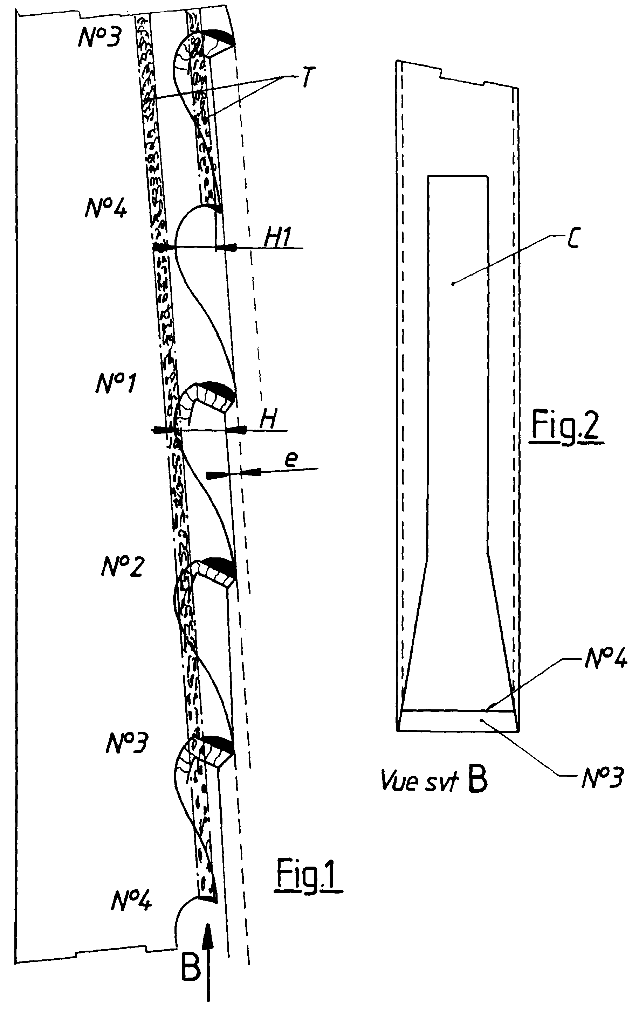

La référence (10), figure 1, représente le dos de la dent, la référence (13) représente le fond de la dent, la référence (11) représente la pointe de la dent, la référence (12) représente le devant de la dent et la référence (14) représente les dépouilles latérales qui, par écrasement permettent de constituer la voie.

La fabrication de la lame comporte une étape de formation du ruban avec, sur les faces du côté correspondant à la surface de coupe, des dépouilles latérales puis une étape de formation, sur le bord de coupe, des profils de denture à pas constant et de même hauteur puis ensuite à écraser la pointe (14) de chaque dent pour donner la voie.

Lorsque l'on scie des grumes gelées ou ayant un taux d'humidité élevé avec des lames traditionnelles, la sciure (S) se colle sur les faces latérales de la scie et finit soit par coincer la scie, soit par provoquer des déviations de la lame qui portent préjudice à la rectitude du trait de scie.

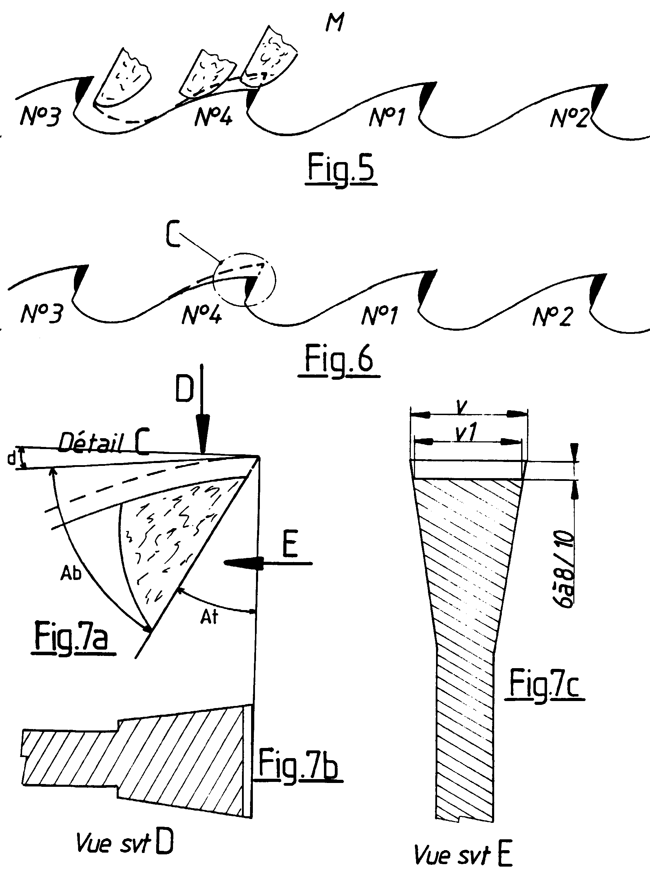

Les dents de la scie comme représentées à la figure 7A ont un angle de dépouille d compris entre 10 et 15 degrés. La dent de scie forme un angle de bec Ab compris entre 40 et 50 degrés et la face d'attaque droite de la dent forme avec une direction perpendiculaire au ruban de la scie un angle d'attaque At compris entre 20 et 35 degrés.

La scie obtenue selon une variante de l'invention, représentée à la figure 1, comporte dans chaque module une dent sur quatre abaissée par rapport aux autres. Comme on peut le voir à la figure 2, l'abaissement de la hauteur de la quatrième dent provoque une légère diminution de la voie de cette quatrième dent par rapport à la voie de la troisième dent.

Cette diminution de 0,5 à 0,75 dixième de millimètre de chaque côté de la voie est tout à fait négligeable et n'empêche pas la dent d'accomplir sa fonction de dent racleuse.

La hauteur (H1) de la quatrième dent est plus courte de six à huit dixièmes de millimètres par rapport aux autres dents, c'est-à-dire de l'ordre de 4% de la hauteur (H) des autres dents. L'épaisseur (e) de la lame forme l'épaisseur du copeau enlevé par chaque dent et (T) représente la trace de la quatrième dent qui racle et évacue la sciure collée.

La lame selon l'invention est obtenue en ajoutant au procédé de fabrication traditionnel au cours duquel l'opération d'affûtage s'effectue sur chaque dent, une opération de rectification du profil du dos et de la pointe d'au moins une dent sur n pour abaisser sa hauteur d'une valeur déterminée par rapport à la hauteur des autres dents. Cette valeur sera de l'ordre de 4% pour une dent sur 4, ou 5, ou 6 et de l'ordre de 2% pour la deuxième dent abaissée sur 4, ou 5, ou 6.

Ainsi, si la hauteur (H) des dents est de 16 millimètres, on abaissera la hauteur de la première dent abaissée six dixièmes, lorsque la hauteur est de 20 millimètres, on abaissera la hauteur de huit dixièmes. Les hauteurs (H) sont choisies en fonction de l'épaisseur de la lame et en fonction des vitesses de coupe et des résultats souhaités.

Le procédé peut être mis en oeuvre par une machine affûteuse comportant sur le mécanisme à cames permettant de former le profil de la denture un dispositif débrayable ou non permettant d'assurer une descente sélective sur une hauteur supérieure de la meule de façon à baisser le profil du dos et de la pointe de la dent sélectionnée lorsque le mécanisme à cames est actionné.

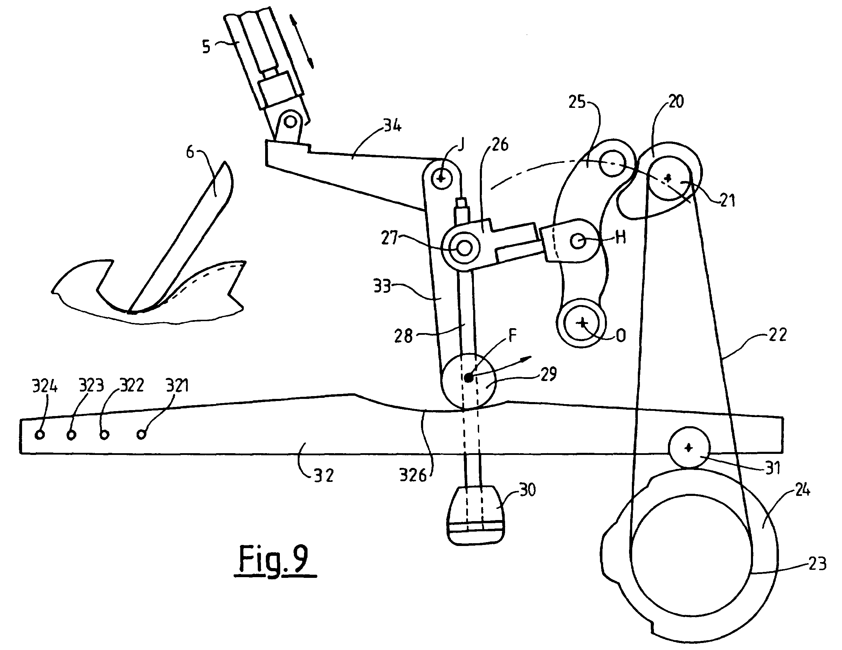

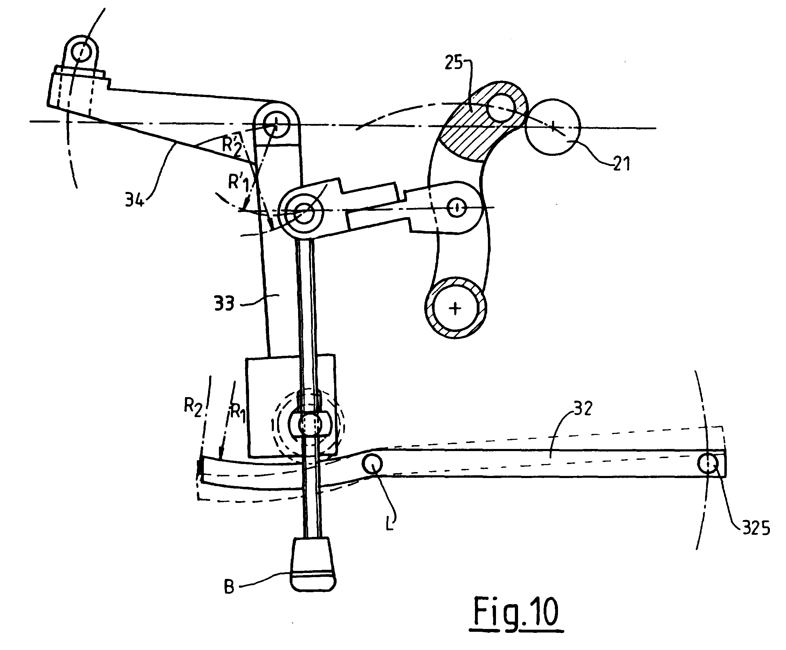

Selon une première variante de la machine (figure9), celle-ci peut être constituée d'un coulisseau (5) commandant les déplacements de la meule (6), d'une part en pénétration dans la lame et, d'autre part parallèlement à la direction longitudinale de la lame, ledit coulisseau (5) étant commandé par un levier double (34, 33) pivotant sur un axe j. Le deuxième levier (33) est lui-même solidaire d'un écrou (27) à une distance (R'2) variable de l'axe (J visible sur la figure 10). Ledit écrou (27) est solidaire d'un poussoir (26) articulé en un point (H) sur un levier de came (25). Le point (H) se trouve approximativement au milieu du levier de came dont une extrémité est articulée en un point (O) et l'autre extrémité appui sur une came (20) de profil dont la forme commandera des déplacements de la meule (6) permettant d'obtenir le profil souhaité pour une dent. Cette came de profil (20) est montée sur un axe entraîiné par un pignon interchangeable (21). Dans l'exemple présenté ledit pignon (21) dispose de 12 dents et engrène avec une courroie crantée (22) qui passe sur un autre pignon (23) disposant lui de 60 dents. Ceci permet de former une lame comprenant des groupes de 5 dents dont les hauteurs peuvent être modifiées par le profil de la came (24) monté solidaire de l'axe du pignon (23). Cette came (24) commande par l'intermédiaire d'un galet (31) les déplacements d'un levier (32). Le levier (32) est lié à l'écrou (27) par une vis (28) qui est plus ou moins vissée dans cet écrou (27). Ladite vis (28) comporte en un point (F), un galet (29) qui se déplace sur une rampe (326) du levier (C). Ladite vis (28) est montée solidaire du galet à bille (29) par un guide à lumière. La came (24) est partagée en 5 secteurs dans le cadre de la démultiplication envisagée et deux des secteurs sont abaissés de 3/10ème pour le premier et de 6/10ème pour le second. Ceci permet donc d'obtenir sur la lame un groupe de 5 dents dont une première est abaissée de 3/10ème et une seconde de 6/10ème, les trois autres étant de taille normale. Les différents axes de pivotement (321 à 324) du levier (32) permettent pour la même came (24) de faire varier dans une certaine plage la valeur dont les dents sont abaissées. Lorsque l'on veut modifier le nombre de dents ou obtenir une scie ayant un groupe de 4 dents ou de 6 dents dans lesquelles une ou deux seront abaissées, il suffira de changer la valeur des pignons (21, 23) d'entraînement et le profil de la came (24) en partageant cette came selon le besoin en 4 ou 6 secteurs dont un certain nombre seront abaissés. La came de profil (20) selon son dessin détermine la profondeur de la dent et sa forme en combinaison avec la came de pas (24) entraînée par le même arbre qui déplace la scie horizontalement par rapport à la tranche de la meule (6). La came de pas (24) détermine la distance d'une pointe de dents à la suivante par la grandeur des secteurs déterminés sur celle-ci. La profondeur de dent peut se régler en agissant sur la vis (28) au moyen du bouton (30) de façon à positionner l'axe (27) du poussoir (26) pour faire varier le point d'actionnement du poussoir (26) sur le levier (33) et de ce fait modifier l'amplitude de mouvement de la meule (6). La vis (28) est réglée pour une profondeur donnée de dent. La position relative du point (27) par rapport à l'axe de levier (33) du levier double (33, 34) modifie progressivement la hauteur de dent pendant la remontée de meule (6) suivant le positionnement du levier (32). Selon la pente du levier (32) conférée par les axes de pivotement et la forme de la came (24), le pousseur (26) et son axe (27) va glisser suivant l'arc de rayon (R'2) visible sur la figure 10. L'amplitude du mouvement de meule s'en trouve ainsi modifiée. Ainsi la hauteur de dent est liée à la position du levier (32).

Enfin, en variante, on peut ajouter sur les affûteuses des dispositifs de comptage du nombre de dents, ces dispositifs de comptage déclenchant automatiquement l'action d'un dispositif permettant la montée ou la descente de la meule toute les n dents.

Dans la variante représentée à la figure 10 qui correspond au dispositif décrit ci-dessus le positionnement du levier (32) qui maintenant est articulé autour d'un axe fixe (L) a son extrémité (325), qui portait dans la version précédente un galet, actionnée par un actionneur electro-pneumatique piloté par un micro-automate. Un codeur opto-électronique entraîné, par exemple, par l'axe (21) de la machine sur lequel est monté la came de profil permet de faire décompter le nombre de dents au micro-automate et par le programme adéquat de commander le déplacement de l'axe (325) par l'actionneur electro-pneumatique d'une valeur réglable par des potentiomètres de commande reliés également au mico-automate.

La sciure est décollée des surfaces débitées et aucune intervention humaine n'est nécessaire pour la racler la surface débitée, ce qui permet un gain de temps.

De même, lors du sciage des bois possédant un fort taux d'humidité, ou des grumes gelées pendant les périodes climatiques sévères, on a constaté une plus grande facilité de sciage, une augmentation de rendement ainsi qu'une conservation de la qualité du trait de scie.

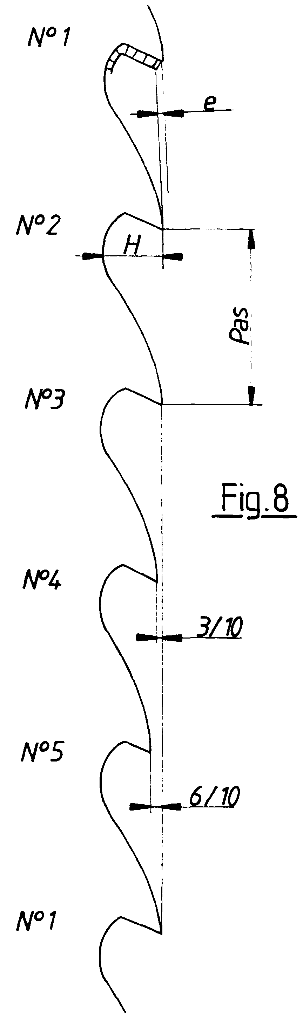

La figure 8 représente une autre variante de lame obtenue selon le procédé de l'invention dans lequel on a provoqué l'abaissement de deux dents sur cinq ou six, la première dent (dent N° 5) étant abaissée de l'ordre de 4% alors que la deuxième dent (dent N° 4) est abaissée de l'ordre de 2% de la hauteur.

On a constaté après essai que la lame ainsi obtenue absorbait parfaitement bien les grumes présentant de gros noeuds et que la rectitude du trait de scie n'était pas affectée. De même, il n'y avait pas diminution importante de la vitesse de sciage.

## Revendications

1. Lame de scie à ruban comportant une portion de section tronconique formant la dépouille latérale par rapport au corps (C) de la lame et pourvue de dents découpées dans la portion de section tronconique selon un pas régulier P, chaque denture ayant une profondeur H qui sera fonction de l'épaisseur e du corps de la lame et de la vitesse de sciage ainsi que de la vitesse d'ammenage des grumes, caractérisée en ce que le pas P est compris entre 45 et 60 mm, la scie comporte des modules de 4 à 6 dents, dont le nombre dépend de la longueur de la lame et des conditions d'utilisation, et en ce qu'au moins une dent sur 4, ou 5, ou 6, est moins haute que les autres dents, de 6 à 8 dixièmes de millimètres, pour des hauteurs de dents variants entre 16 et 20 millimètres.

2. Lame de scie à ruban comportant une portion de section tronconique formant la dépouille latérale par rapport au corps (C) de la lame et pourvue de dents découpées dans la portion de section tronconique selon un pas régulier P, chaque denture ayant une profondeur H qui sera fonction de l'épaisseur e du corps de la lame et de la vitesse de sciage ainsi que de la vitesse d'ammenage des grumes, caractérisée en ce que le pas régulier P est compris entre 2 à 3 fois la hauteur des dents les plus hautes, et la hauteur d'au moins une dent sur 4, ou 5, ou 6 est diminuée d'une valeur de 4 % de la hauteur des dents les plus hautes.

3. Lame de scie selon la revendication 1 ou 2, caractérisée en ce que dans le cas où une deuxième dent est abaissée cette hauteur est diminuée de 2 % par rapport à la première dent abaissée.

4. Lame de scie selon la revendication 1 ou 2, caractérisée en ce que la pointe de chaque dent est écrasée pour donner la voie.

5. Lame de scie selon la revendication 1 ou 2, caractérisée en ce que l'on choisira des modules de six dents et une dent sur six est abaissée pour une vitesse de coupe de 40 à 48 mètres seconde.

6. Lame de scie selon la revendication 1 ou 2, caractérisée en ce que l'on choisira des modules de cinq dents et une dent sur cinq est abaissée.

7. Lame de scie selon la revendication 1 ou 2, caractérisée en ce que l'on choisira des modules de quatre dents et une dent sur quatre est abaissée pour la coupe des bois exotiques.

8. Lame de scie selon une des revendications précédentes, caractérisée en ce que le pas entre dents sera choisi entre 45 et 50 millimètres.

9. Lame de scie selon une des revendications précédentes, caractérisée en ce que l'on choisit des modules de cinq ou six dents et que l'on abaisse la hauteur de deux dents sur cinq ou six.

10. Procédé de fabrication d'une lame de scie à ruban à une ou deux faces de coupe selon une des revendications précédentes consistant :
- à former un ruban avec, sur les faces du côté correspondant à la surface de coupe, des dèpouilles latérales;
- à former sur le bord de coupe les profils de denture à pas constant et de même hauteur;
caractérisé en ce qu'il comporte en outre les étapes consistant :
- a écraser la pointe de chaque dent pour donner la voie;
- a affûter chaque dent;
- à rectifier le profil du dos et de la pointe d'au moins une dent sur n pour abaisser d'une valeur déterminée sa hauteur par rapport aux autres dents.

11. Machine affûteuse permettant la mise en oeuvre du procédé selon la revendication 10, caractérisée en ce qu'elle comporte sur le mécanisme à cames permettant de former le profil de la denture un dispositif débrayable permettant d'assurer une descente sélective sur une hauteur supérieure de la meule de façon à baisser le profil du dos et de la pointe de la dent sélectionnée lorsque le mécanisme est actionné.

12. Machine selon la revendication 11, caractérisée en ce qu'elle comporte des moyens de compter le nombre de dents et de provoquer automatiquement la sélection et l'actionnement du mécanisme de descente.

## Claims

1. Band-saw blade comprising a portion that has a truncated cross-section forming the lateral clearance relative to the body (C) of the blade and provided with teeth cut into the truncated cross-section portion at a regular pitch P, each tooth being of a depth H that is a function of the thickness e of the body of the blade and the cutting speed as well as of the timber feed speed, characterized in that the regular pitch P is between 45 and 60 mm, the saw comprises modules with 4 to 6 teeth, the number of which depends on the length of the blade and the conditions of use, also characterized in that at least one tooth of every 4, 5 or 6 is shallower than the others by 6 to 8 tenths of a millimeter for teeth of depth varying between 16 and 20 millimeters.

2. Band-saw blade comprising a portion that has a truncated cross-section forming the lateral clearance relative to the body (C) of the blade and provided with teeth cut into the truncated cross-section portion at a regular pitch P, each tooth being of a depth H that is a function of the thickness e of the body of the blade and the cutting speed as well as of the timber feed speed, characterized in that the regular pitch P is between 2 to 3 times the depth of the longest teeth and the depth of at least one tooth of every 4, 5 or 6 is reduced relative to the others by a value of 4% of the length of the longest teeth.

3. Band-saw blade of claim 1 or 2, characterized in that where the depth of a second tooth is reduced, this reduction is of 2% relative to the first tooth the depth of which is reduced.

4. Band-saw blade of claim 1 or 2, characterized in that the point of each tooth is flattened to provide the kerf.

5. Band-saw blade of claim 1 or 2, characterized in that six-tooth modules where one tooth in six is shortened are selected for cutting speeds of 40 to 48 meters per second.

6. Band-saw blade of claim 1 or 2, characterized in that five-tooth modules where one tooth in five is shortened are selected.

7. Band-saw blade of claim 1 or 2, characterized in that four-tooth modules where one tooth in four is shortened are selected for cutting colonial timber.

8. Band-saw blade of any of the preceding claims, characterized in that the pitch between two teeth is selected between 45 and 50 millimeters.

9. Band-saw blade of any of the preceding claims, characterized in that modules of five or six teeth are selected and that two teeth in five or six are shortened.

10. Manufacturing process for a band-saw blade with one or two cutting surfaces of any of the preceding claims consisting in:
- creating a band with lateral clearances on the sides constituting the cutting surfaces;
- creating tooth profiles of constant pitch and identical height on the cutting edge;
characterized in that it also comprises stages consisting in:
- flattening the point of each tooth to provide the kerf;
- sharpening each tooth;
- rectifying the profile of the back and the point of at least one tooth in n to lower its height relative to the other teeth by a given value.

11. Sharpening machine for implementing the process of claim 10, characterized in that the cam mechanism used to create the tooth profile is fitted with a disengageable device that enables a selective descent of a height greater than that of the mold such as to lower the profile of the back and point of the selected tooth when the mechanism is activated.

12. Machine of claim 11, characterized in that it comprises means for counting the number of teeth a automatically triggering the selection and activation of the descent mechanism.

## Patentansprüche

1. Bandsägeblatt mit einem Kegelstumpfabschnitt, der die seitliche Schräge in Bezug auf den Körper (C) des Blattes bildet, und mit im Kegelstumpfabschnitt nach einer regelmäßigen Teilung P ausgeschnittenen Zähnen, wobei jeder Zahn eine Tiefe H aufweist, entsprechend der Dicke e des Körpers des Blattes und der Sägegeschwindigkeit sowie der Zuführungs-geschwindigkeit der Stammhölzer, dadurch gekennzeichnet, daß die Teilung P zwischen 45 und 60 mm beträgt, die Säge Module mit 4 bis 6 Zähnen umfaßt, deren Anzahl von der Blattlänge und den Verwendungsbedingungen abhängig ist, und daß mindestens ein Zahn von 4 oder 5 oder 6 um 6 bis 8 Zehntel Millimeter niedriger ist als die anderen Zähne, bei zwischen 16 und 20 Millimetern schwankenden Zahnhöhen.

2. Bandsägeblatt mit einem Kegelstumpfabschnitt, der die seitliche Schräge in Bezug auf den Körper (C) des Blattes bildet, und mit im Kegelstumpfabschnitt nach einer regelmäßigen Teilung P ausgeschnittenen Zähnen, wobei jeder Zahn eine Tiefe H aufweist, entsprechend der Dicke e des Körpers des Blattes und der Sägegeschwindigkeit sowie der Zuführungs-geschwindigkeit der Stammhölzer, dadurch gekennzeichnet, daß die regelmäßige Teilung P zwischen 2 bis 3 mal der Höhe der höchsten Zähne entspricht und die Höhe mindestens eines Zahnes von 4 oder 5 oder 6 um einen Wert von 4 % der Höhe der höchsten Zähne verringert wird.

3. Sägeblatt nach Anspruch 1 oder 2, dadurch gekennzeichnet, daß wenn ein zweiter Zahn erniedrigt wird, diese Höhe um 2 % in Bezug auf den ersten erniedrigten Zahn verringert wird.

4. Sägeblatt nach Anspruch 1 oder 2, dadurch gekennzeichnet, daß die Spitze eines jeden Zahnes flachgedrückt ist, um den Weg vorzugeben.

5. Sägeblatt nach Anspruch 1 oder 2, dadurch gekennzeichnet, daß man Module mit sechs Zähnen wählt, wobei ein Zahn von sechs erniedrigt ist, für eine Schneidgeschwindigkeit von 40 bis 48 Metern/Sekunde.

6. Sägeblatt nach Anspruch 1 oder 2, dadurch gekennzeichnet, daß man Module von fünf Zähnen wählt und ein Zahn von fünf erniedrigt ist.

7. Sägeblatt nach Anspruch 1 oder 2, dadurch gekennzeichnet, daß man Module von vier Zähnen wählt und ein Zahn von vier für das Schneiden von exotischen Hölzern erniedrigt ist.

8. Sägeblatt nach einem der vorstehend genannten Ansprüche, dadurch gekennzeichnet, daß die Teilung zwischen den Zähnen zwischen 45 und 50 Millimetern gewählt wird.

9. Sägeblatt nach einem der vorstehend genannten Ansprüche, dadurch gekennzeichnet, daß man Module von fünf oder sechs Zähnen wählt, und daß man die Höhe von zwei Zähnen von fünf oder sechs erniedrigt.

10. Herstellungsverfahren eines Bandsägeblattes mit einer oder zwei Schnittflächen nach einem der vorstehend genannten Ansprüche, um :
- an den Flächen der der Schnittfläche entsprechenden Seiten seitliche Schrägen zu bilden ;
- am Schnittrand Zahnprofile mit konstanter Teilung und von gleicher Höhe zu bilden ;
dadurch gekennzeichnet, daß es weiters Etappen umfaßt, um :
- die Spitze eines jeden Zahnes flachzudrücken, um den Weg vorzugeben ;
- jeden Zahn zu schleifen ;
- das Rücken- und Spitzenprofil von mindestens einem Zahn von n abzuschleifen, um seine Höhe in Bezug auf die anderen Zähne um einen vorgegebenen Wert zu erniedrigen.

11. Schleifmaschine zum Umsetzung des Verfahrens nach Anspruch 10, dadurch gekennzeichnet, daß sie am Nockenmechanismus zur Bildung des Zahnprofils eine abkoppelbare Vorrichtung umfaßt, die ein selektives Absenken auf eine höhere Höhe der Schleifscheibe ermöglicht, um das Profil des Rückens und der Spitze des gewählten Zahnes zu erniedrigen, wenn der Mechanismus betätigt ist.

12. Maschine nach Anspruch 11, dadurch gekennzeichnet, daß sie Mittel zum Zählen der Zahnanzahl und zum automatischen Auslösen der Wahl und der Betätigung des Absenkmechanismus umfaßt.
